# FASCICULE DE BREVET EUROPEEN

(11) **EP 0 606 032 B1**
(45) Date de publication et mention de la délivrance du brevet: **28.10.1998**
(21) Numéro de dépôt: 93403139.4
(22) Date de dépôt: 22.12.1993
(51) Int. Cl.: B23D 41/04, B23Q 1/25

(54) **Chariot d'avance et machine de brochage comportant un tel chariot**
Vorschubschlitten und mit solch einem Schlitten ausgerüstete Räummaschine
Feeding carriage and broaching machine equipped with such a carriage

(30) Priorité: 06.01.1993 FR 9300052
(43) Date de publication de la demande: 13.07.1994
(73) Titulaire: RENAULT AUTOMATION, 92109 Boulogne-Billancourt (FR)
(72) Inventeur: Assie, Jean Paul, F-81100 Castres (FR); Daulon, Jean Louis, F-81100 Castres (FR)
(74) Mandataire: Ernst-Schonberg, Michel

(56) Documents cités:
- EP-A- 0 036 912
- DE-A- 1 801 621
- DE-A- 2 312 786
- GB-A- 553 159
- SOVIET PATENTS ABSTRACTS Section PQ, Week 9026, Derwent Publications Ltd., London, GB; Class P, AN 90-199870 & SU-A-1 526 933 (MIRONOV E A)

## Description

La présente invention est relative à un chariot d'avance pour machine de brochage conforme au préambule de la revendication indépendante.

La publication FR-A-2358951 décrit une machine de brochage équipée d'un tel chariot d'avance. L'outil de brochage devant être tiré à travers le préperçage pour agrandir celui-ci par arrachage de copeaux jusqu'aux dimensions du trou à usiner, on comprend qu'il est nécessaire de centrer l'outil et le porte-outil, présentés de part et d'autre du pré-perçage, sur l'axe de celui-ci. Quant la pièce à usiner est de petites dimensions, celle-ci s'autocentre automatique sur l'outil de brochage, ou broche, pendant l'usinage du trou. Par contre, si la pièce n'est pas mobile, par exemple du fait de son encombrement et/ou de son poids importants, il faut pouvoir centrer manuellement ou automatiquement la broche dans le pré-perçage si l'on veut éviter un décentrement du trou final par rapport au pré-perçage.

La publication FR-A-2044897 décrit une machine à broches mutiples, capable de percer plusieurs trous simultanément dans une même pièce. Il arrive que les tolérances de fabrication de telles pièces soient plus sévères en ce qui concerne le diamètre des trous à percer qu'en ce qui concerne les entre-axes de ces trous. Dans cette situation, il importe que chacune des broches puissent s'autocentrer sur le pré-perçage prévu pour elle de manière à assurer l'usinage de trous parfaitement calibrés, quand bien même les entre-axes de ceux-ci seraient soumis à des tolérances moins strictes. C'est le cas par exemple de plaques servant d'entretoises pour des faisceaux de tubes dans des échangeurs thermiques de grande capacité. Un centrage correct des broches dans les pré-perçages correspondants présente en outre l'avantage d'éviter d'appliquer des contraintes de flexion aux outils de brochage et donc d'altérer leurs capacités de coupe et éventuellement leur durée de vie.

La présente invention a donc pour but de réaliser un chariot d'avance pour machine de brochage conçu de manière à permettre l'autocentrage d'un outil de brochage dans un pré-perçage formé dans une pièce à brocher.

La présente invention a aussi pour but de réaliser un tel chariot d'avance utilisable dans une machine de multibrochage.

On atteint ces buts de l'invention, ainsi que d'autres qui apparaîtront à la lecture de la description qui va suivre, avec un chariot d'avance pour machine de brochage, supportant un porte outil conçu pour s'accoupler à l'entraîneur d'un outil de brochage introduit dans un pré-perçage formé dans une pièce à percer d'un trou de dimensions prédéterminées, le chariot d'avant étant mobile de manière à entraîner le port-outil et l'outil dans une direction prédéterminée pour tirer l'outil à travers le pré-perçage. Suivant la caractéristique de la revendication 1 le chariot d'avance comprend des moyens pour supporter le porte-outil avec deux degrés de liberté perpendiculairement à la direction prédéterminée, de manière à autoriser un autocentrage de l'outil sur l'axe du pré-perçage, pour l'usinage du trou, lesdits moyens de support comprenant un plateau de montage du porte-outil sur une platine du chariot prévue pour développer un effort de traction sur l'outil et le porte-outil, ce dernier étant monté mobile sur le plateau suivant un axe perpendiculaire au sien alors que le plateau est monté mobile sur la platine de traction suivant un axe perpendiculaire à ces deux axes, de manière à établir entre le porte-outil et la platine un couplage mécanique du type "joint d'Oldham". En outre, une bague est montée sur le porte-outil pour supporter celui-ci à coulissement suivant un axe parallèle à la direction prédéterminée de traction.

Grâce à ce couplage et à ce montage, le porte-outil peut "suivre" l'outil quand celui-ci se centre dans le pré-perçage, dès que la platine applique une traction sur ceux-ci. Les axes de l'outil et du porte-outil étant alors parfaitement centrés sur celui du pré-perçage, le trou à usiner est lui-aussi parfaitement centré sur le pré-perçage, quand bien même celui-ci serait quelque peu décentré par rapport à sa position nominale. En outre, la coaxialité des axes de l'outil et du pré-perçage par rapport à celui du porte-outil suivant lequel s'exerce l'effort de traction appliqué à l'outil de brochage, assure que l'outil ne subit aucun effort de flexion ou de cintrage susceptible de le fatiguer et donc de diminuer sa durée de vie utile.

D'autres caractéristiques et avantages de la présente invention apparaîtront à la lecture de la description qui va suivre et à l'examen du dessin annexé dans lequel :
- la figure 1 représente une vue partielle du chariot d'avance suivant l'invention, en coupe axiale suivant le trait de coupe I-I de la figure 2, et
- la figure 2 est une vue d'un chariot multibroche selon l'invention, prise suivant la flèche F₁ de la figure 1.

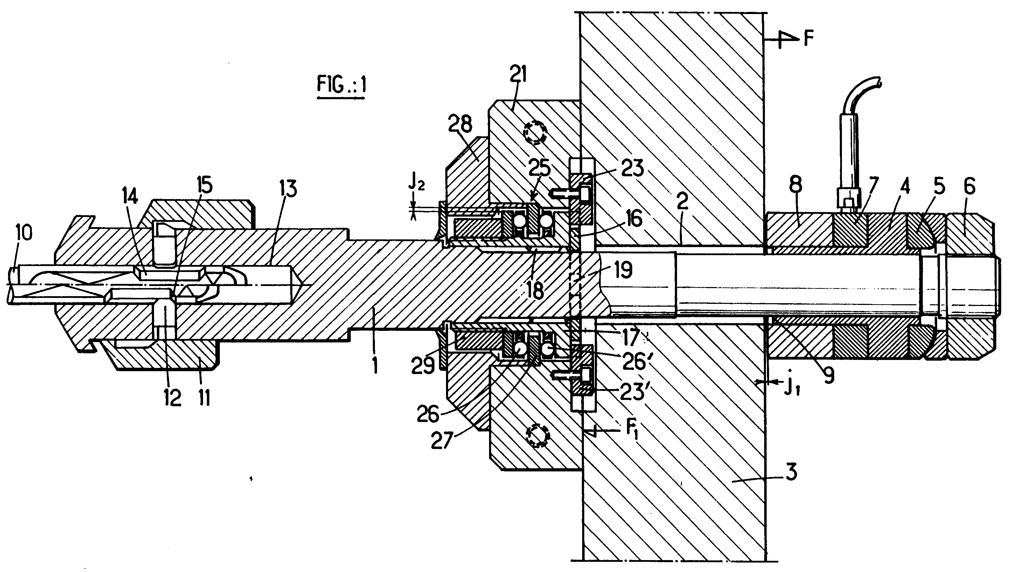

Le chariot d'avance représenté à la figure 1 comprend un porte-outil 1 traversant un alésage 2 d'une platine 3. A son extrémité droite, du point de vue de la figure 1, le porte-outil reçoit une pièce de butée 4 pouvant glisser sur sa surface extérieure, cette pièce étant adjacente à une rotule 5 en appui sur une partie élargie de la pièce 4, la rotule étant arrêtée par un écrou 6 fixé à l'extrémité droite du porte-outil. Un capteur d'effort 7 est pincé entre la partie élargie de la pièce 4 et une bague d'appui 8 montée sur cette pièce de manière à déborder de l'extrémité gauche 9 de celle-ci, jusqu'au voisinage de la platine 3.

Ainsi, en fonctionnement, lorsqu'un effort de traction est appliqué sur la platine 3 par des moyens (non représentés) tels qu'un vérin hydraulique, la platine s'appuie sur l'extrémité adjacente de la bague 8, après rattrapage d'un faible jeu j₁. L'effort de traction ainsi développé est transmis au porte-outil 1 par l'intermédiaire de la bague 8 alors que le capteur 7, pincé entre cette bague et la pièce 4, délivre un signal représentatif de l'amplitude de cet effort à des moyens (non représentés) de surveillance de celui-ci, pour un but que l'on expliquera plus loin.

Comme cela apparaît sur les demi-vues en coupe axiale de l'extrémité gauche (du point de vue de la figure 1) du porte-outil 1, celui-ci comprend des moyens de fixation de l'entraîneur d'un outil de brochage 10, ou broche, également partiellement représenté à cette figure. Ces moyens comprennent classiquement une bague 11 montée coulissante sur le porte-outil et des doigts 12 montés mobiles dans des trous radiaux du porte-outil. Celui-ci est percé d'un alésage axial 13 propre à recevoir complémentairement un entraîneur 14 formant partie de l'outil 10. Cet entraîneur comporte une surface d'entraînement 15 sur laquelle les doigts 12 viennent en prise quand ils sont repoussés vers l'axe du porte-outil par la bague 11 (voir la demi-coupe inférieure de l'extrémité gauche du porte-outil) de manière à coupler l'outil 10 et le porte-outil 1 en translation vers la droite quand la platine 3 est tirée dans le sens de la flèche F.

Suivant une caractéristique essentielle du chariot selon la présente invention, le porte-outil est monté sur la platine 3 de manière à disposer de deux degrés de liberté perpendiculairement à son axe, dans l'alésage 2 de la platine. Le montage est tel que l'axe du porte-outil est libre de se déplacer parallèlement à lui-même pour se centrer sur un pré-perçage (non représenté) prévu dans une pièce à brocher, alors que cette pièce est traversée par une partie de l'outil de brochage 10 dont l'entraîneur 14 est fixé au porte-outil 1 par les moyens 11,12.

Une telle capacité trouve son utilité par exemple dans l'application mentionnée ci-dessus au brochage d'une plaque de support de tubes pour échangeur thermique de grande capacité. Une telle plaque peut être munie de plusieurs milliers de pré-perçages, une certaine tolérance devant être admise quant à la valeur des entre-axes de ces pré-perçages, par exemple de l'ordre du millimètre, pour des trous à brocher à un diamètre de l'ordre de 10 mm à partir de pré-perçages de diamètres inférieurs.

Pour qu'une broche passée dans un tel pré-perçage se centre correctement sur celui-ci, il est indispensable que le porte-outil puisse se déplacer transversalement sous l'action des forces appliquées à l'outil par la pièce pré-percée, lorsqu'un effort de traction commence à être exercé sur le plateau 3 pour faire passer la broche à travers le pré-perçage. Le déplacement transversal possible de l'axe du porte-outil doit ainsi pouvoir absorber toute variation d'entre-axes entre perçages. Dans l'hypothèse envisagée plus haut où cette variation est de l'ordre du millimètre, le déplacement transversal autorisé de l'axe du porte-outil devra être du même ordre, donc faible mais pas inexistant.

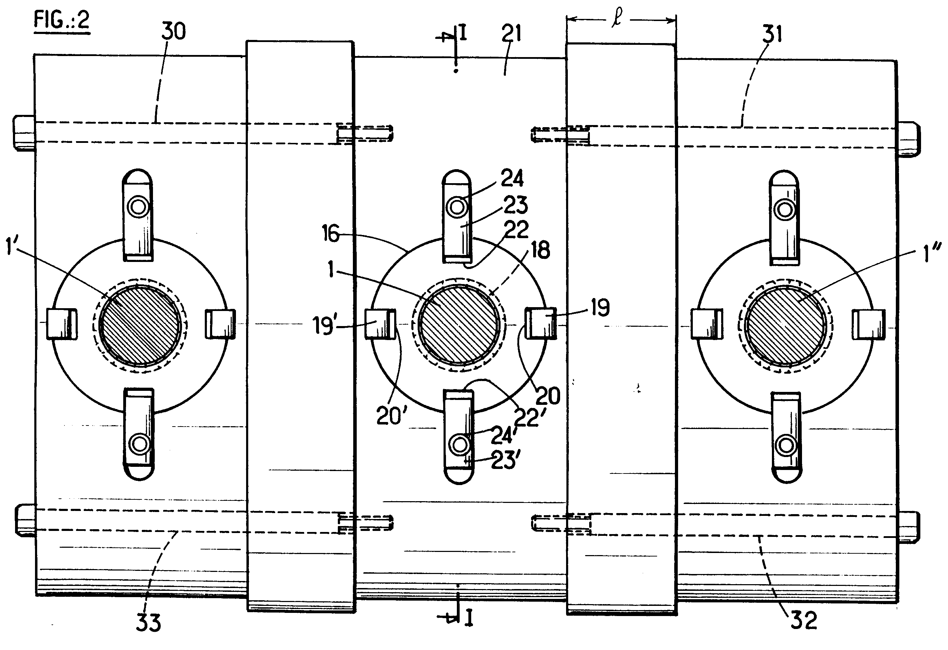

Pour obtenir un tel montage "flottant" du porte-outil, on installe entre celui-ci et la platine 3 un plateau de montage 16 en forme de disque (voir figure 2), le porte-outil 1 étant mobile par rapport au plateau suivant un diamètre perpendiculaire au plan de la figure 1 alors que le plateau est mobile par rapport à la platine 3 suivant un axe perpendiculaire à celui du porte-outil, dans le plan de la figure 1, de manière à établir entre le porte-outil et la platine un couplage mécanique du type de celui du joint dit "d'Oldham" classiquement établi entre deux arbres aboutés, parallèles et désaxés, pour transmettre à l'un une rotation imprimée à l'autre.

Le plateau 16 est monté contre une bague 17 glissée sur la partie médiane du porte-outil, auquel cette bague est solidarisée par une liaison à cannelures 18 autorisant un glissement du porte-outil suivant l'axe de la bague, perpendiculaire à la platine 3. Deux tenons 19,19' diamétralement opposés et débordant de la bague 17 coulissent dans deux rainures complémentaires 20,20', respectivement, découpées aux extrémités d'un diamètre dans le plateau 16, comme cela est plus apparent sur la partie centrale de la figure 2. Ainsi, du point de vue de la figure 2, le porte -outil 1 est-il mobile de droite à gauche et de gauche à droite par rapport au plateau de montage 18, dans la limite offerte par le débattement des tenons 19,19' dans les rainures 20,20' respectivement.

Sur la figure 2, il apparaît aussi que le plateau de montage 16 est monté mobile verticalement sur une base 21 fixée par des moyens (non représentés) sur la platine 3. Pour ce faire, le plateau 16 est découpé de deux autres rainures 22,22' diamétralement opposées sur un diamètre du plateau 16 perpendiculaire à celui sur lequel sont centrées les rainures 20,20', ces dernières coopérant à glissement avec des tenons complémentaires 23,23' respectivement, fixés sur la base 21 par des boulons 24,24' respectivement.

On comprend que, grâce aux deux jeux de rainures et de tenons complémentaires décrits ci-dessus, le porte-outil 1 peut se déplacer dans toutes les directions du plan de la figure 2, avec un débattement maximum limité par le jeu j₂ (voir figure 1) établi entre la base 21 et une partie élargie de la bague 17 contre laquelle glisse le plateau 16.

Des ressorts de rappel (non représentés) centrent le porte-outil dans l'alésage 2 de la platine, lorsque le porte-outil n'est pas soumis à des efforts autres que son poids. Les efforts développés par ces ressorts sont établis à un niveau tel que, dès qu'un outil attaché au porte-outil est en contact avec les bords d'un pré-perçage alors que la platine 3 commence à tirer sur le porte-outil pour tirer l'outil à travers ce pré-perçage, les efforts développés à l'interface outil/pré-perçage l'emportent sur les efforts développés par les ressorts de rappel et tendent à entraîner le porte-outil dans une position centrée sur le pré-perçage en équilibrant les efforts transversaux exercés à cette interface.

La liberté de déplacement transversal du porte-outil, à partir d'une position centrale nominale définie par les ressorts de rappel, est assurée par la présence d'une butée, à billes par exemple, généralement repérée 25 à la figure 1. Celle-ci comprend deux cages à billes 26,26' séparées par un chemin de roulement 27 bloqué sur la base 21 par une bague vissante 28. La butée à billes est elle-même bloquée axialement sur la bague 17 par un écrou 29. Ainsi, grâce au montage "flottant" du porte-outil, en l'absence d'efforts développés entre un outil et une pièce à brocher, le porte-outil reste-t'il centré dans l'alésage 2, porté par la butée à billes 25 dans la base 21. Sous effort de traction, l'autocentrage de l'outil et du porte-outil s'établit sans contrainte grâce à la butée à billes 25.

On notera qu'il faut empêcher l'outil de basculer par rapport à la direction de traction, pendant les phases de centrage et d'usinage. Le montage à coulissement du porte-outil 1 dans la bague 17 empêche, suivant la présente invention, un tel basculement. Ce montage permet, pendant l'absorption du jeu j₁, aux deux pièces de se déplacer l'une par rapport à l'autre en conservant leur orientation.

On notera aussi que l'écrou 29 permet de précontraindre la butée à billes 25 et garantit un déplacement parfaitement radial de l'outil et du porte-outil, qui reste parallèle à lui-même pendant la phase d'autocentrage. Ainsi, l'axe de la broche reste parallèle à l'axe du pré-perçage ce qui permet de supprimer l'application de toute contrainte de cintrage sur la broche et donc les fatigues et usures supplémentaires qui pourraient en résulter pour celle-ci.

On notera encore qu'en cours de brochage, la butée à billes 25 ne supporte pas de surefforts axiaux. En effet, l'effort de traction appliqué à la platine 3 est transmis directement au porte-outil 1 par l'intermédiaire de la bague d'appui 8 après suppression du jeu axial j₁.

Le capteur d'effort 7 peut être de tout type connu, par exemple piézoélectrique ou à jauge de contrainte. Il fournit un signal à des moyens électroniques de surveillance de l'amplitude de l'effort axial encaissé par le porte-outil et donc par l'outil. En cas de dépassement par cet effort d'une valeur prédéterminée, ces moyens peuvent commander un arrêt ou une réduction de l'effort de traction exercé sur la broche, afin d'éviter une détérioration de la machine de brochage. Suivant l'invention, on surveille en permanence les variations de l'effort encaissé, de manière que l'imminence d'un dépassement puisse être détectée et des mesures correctrices prises en conséquence.

Comme représenté à la figure 2, le chariot d'avance suivant l'invention peut être adapté à une machine de multibrochage, par assemblage de plusieurs platines et porte-outils associés à l'aide de tirants transversaux 30,31,32,33. Ainsi, à la figure 2, trois platines 3,3',3'' de supports de porte-outils 1,1',1'' respectivement sont-elles assemblées avec interposition d'entretoises 34,35 d'épaisseur l calculée pour établir des entre-axes nominaux prédéterminés entre les broches portées par les porte-outils.

Bien entendu l'invention n'est pas limitée au mode de réalisation décrit et représenté qui n'a été donné qu'à titre d'exemple. Ainsi, on pourrait remplacer la butée à billes par des paliers hydrostatiques, aérostatiques ou par tout autre moyen autorisant un déplacement radial du porte-outil avec un minimum de frottement. Egalement, on pourrait remplacer les entretoises 34,35 du chariot de multibrochage représentées à la figure 2 par un support de platine en forme de "peigne", ce peigne étant conformé pour disposer les porte-outils les uns par rapport aux autres avec des entre-axes nominaux prédéterminés.

## Revendications

1. Chariot d'avance pour machine de brochage, supportant un porte-outil (1) conçu pour s'accoupler à l'entraîneur d'an outil de brochage (10) introduit dans a pré-perçage formé dans une pièce à percer d'un trou de dimensions prédéterminées, le chariot d'avance étant mobile de manière à supporter et ertraîner le porte-outil et l'outil dans une direction prédéterminée pour tirer l'outil à travers le pré-perçage, caractérisé en ce que le chariot d'avance comprend des moyens (16,25) pour supporter le porte-outil (1) avec deux degrés de liberté perpendiculairement à la direction prédéterminée, de manière à autoriser un autocentrage de l'outil sur l'axe du pré-perçage, pour l'usinage du trou, en ce les moyens support du porte-outil étant constitués par un plateau de montage (16) du porte-outil (1) sur une platine de traction (3) du chariot prévue pour développer un effort de traction sur l'outil (10) et le porte-outil (1), ce dernier étant monté mobile sur le plateau (16) suivant un axe perpendiculaire au sien alors que le plateau (16) est monté mobile sur la platine de traction (3) suivant un axe perpendiculaire à ces deux axes, de manière à établir entre le porte-outil et la platine un couplage mécanique du type "joint d'Oldham".

2. Chariot conforme à la revendication 1, caractérisé en ce qu'une bague (17) est montée sur le porte-outil (1) pour supporter celui-ci à coulissement suivant un axe parallèle à la direction prédéterminée de traction.

3. Chariot conforme à la revendication 2, carctérisé en ce que le plateau (16) est monté sur la bague (17), cette bague portant en outre au moins une butée (25) s'appuyant sur un chemin de roulement (27) solidaire de la platine (3) de traction et perpendiculaire à l'axe du porte-outil, un jeu (j₂) étant ménagé entre la périphérie de la butée (25) et la platine pour autoriser un déplacement du porte-outil perpendiculairement à son axe lors du centrage de l'outil dans le pré-perçage.

4. Chariot conforme à la revendication 3, caractérisé en ce que le plateau de montage prend la forme d'un disque encoché de rainures (20,20' ; 22,22') aux extrémités de deux diamètres perpendiculaires, deux tenons (19,19') solidaires de la bague (17) coopérant avec les rainures d'un diamètre pour assurer un montage à coulissement du porte-outil (1) sur le plateau (16), suivant ce diamètre, et deux autres tenons (23,23') solidaires de la platine de traction (3) coopérant avec les deux autres rainures (22,22') pour assurer un montage à coulissement du plateau (16) sur la platine de traction (3).

5. Chariot conforme à l'une quelconque des revendications précédentes, caractérisé en ce que le porte-outil (1) traverse la platine de traction (3) et comprend un capteur d'effort (7) monté sur la partie du porte-outil (1) qui déborde de la platine (3), du côté de celle-ci qui est opposé à celui où se trouve l'outil (10), le capteur (7) étant pincé entre des moyens (4,8) quand ceux-ci encaissent l'effort de traction exercé par la platine (3) sur le porte-outil (1).

6. Chariot conforme à la revendication 5, caractérisé en ce qu'un jeu (j₁) est établi entre la platine de traction (3) et un moyen d'appui (8) en l'absence d'effort de traction.

7. Chariot conforme à l'une quelconque des revendications 2 à 7, caractérisé en ce qu'il comprend des moyens de rappel du porte-outil (1) dans une position nominale de centrage sur la platine (3) de traction.

8. Chariot d'avance pour machine de multibrochage, caractérisé en ce qu'il est constitué par la réunion de plusieurs chariots d'avance conforme à l'une quelconque des revendications précédentes, des moyens d'entretoise (34,35) étant interposés entre deux chariots adjacents pour régler l'entre-axe nominal de leurs porte-outils.

9. Chariot conforme à la revendication 8, caractérisé en ce que lesdits moyens d'entretoise prennent la forme d'un support en forme de "peigne" conformé pour disposer les porte-outils les uns par rapport aux autres avec des entre-axes nominaux prédéterminés.

10. Utilisation d'un chariot d'avance conforme à l'une quelconque des revendications 1 à 9, dans une machine de brochage ou de multibrochage.

## Claims

1. A feed carriage for a broaching machine, supporting a tool carrier (1) designed to be coupled to the drive means of a broaching tool (10) introduced into a previously formed opening in a component to be pierced with a hole of predetermined dimensions, the feed carriage being movable in such a way as to support and entrain the tool carrier and the tool in a predetermined direction to pull the tool through the previously formed opening, characterised in that the feed carriage comprises means (16, 25) for supporting the tool carrier (1) with two degrees of freedom perpendicularly to the predetermined direction, so as to permit self-centering of the tool in relation to the axis of the previously formed opening, for machining of the hole, the support means for the tool carrier being formed by a plate (16) for mounting the tool carrier (1) on a traction plate portion (3) of the carriage which is provided to develop a traction force on the tool (10) and the tool carrier (1), the latter being mounted movably on the plate (16) in the direction of an axis perpendicular to its axis while the plate (16) is mounted movably on the traction plate portion (3) in the direction of an axis perpendicular to said two axes, in such a way as to establish a mechanical coupling of the Oldham coupling type between the tool carrier and the plate portion.

2. A carriage according to claim 1 characterised in that a ring (17) is mounted on the tool carrier (1) to support same for sliding movement in the direction of an axis parallel to the predetermined traction direction.

3. A carriage according to claim 2 characterised in that the plate (16) is mounted on the ring (17), said ring also carrying at least one thrust means (25) bearing against a rolling track (27) which is fixed with respect to the traction plate portion (3) and perpendicular to the axis of the tool carrier, a clearance (j₂) being provided between the periphery of the thrust means (25) and the plate portion to permit displacement of the tool carrier perpendicularly to its axis upon centering of the tool in the previously formed opening.

4. A carriage according to claim 3 characterised in that the mounting plate is in the form of a disc notched with grooves (20, 20'; 22, 22') at the ends of two perpendicular diameters, two lugs (19, 19') which are fixed with respect to the ring (17) co-operating with the grooves of one diameter to provide for slidable mounting of the tool carrier (1) on the plate (16) along said diameter, and two other lugs (23, 23') which are fixed with respect to the traction plate portion (3) co-operating with the other two grooves (22, 22') to provide for slidable mounting of the plate (16) on the traction plate portion (3).

5. A carriage according to any one of the preceding claims characterised in that the tool carrier (1) passes through the traction plate portion (3) and comprises a force sensor (7) mounted on the part of the tool carrier (1) which projects beyond the plate portion (3) on the side thereof which is opposite to that at which the tool (10) is disposed, the sensor (7) being gripped between means (4, 8) when they are subject to the traction force applied to the tool carrier (1) by the plate portion (3).

6. A carriage according to claim 5 characterised in that a clearance (j₁) is established between the traction plate portion (3) and a support means (8) in the absence of a traction force.

7. A carriage according to any one of claims 2 to 6 characterised in that it comprises means for returning the tool carrier (1) to a nominal centering position on the traction plate portion (3).

8. A feed carriage for a multi-broaching machine characterised in that it is formed by the combination of a plurality of feed carriages according to any one of the preceding claims, spacer means (34, 35) being interposed between two adjacent carriages to regulate the nominal inter-axis spacing of their tool carriers.

9. A carriage according to claim 8 characterised in that said spacer means are in the form of a support in the shape of a 'comb' shaped to arrange the tool carriers with respect to each other with the predetermined nominal inter-axis spacings.

10. Use of a feed carriage according to any one of claims 1 to 9 in a broaching or multi-broaching machine.

## Patentansprüche

1. Vorschubschlitten für eine Räummaschine, auf welchem sich ein Werkzeugträger (1) abstützt, der so ausgebildet ist, daß er an den Antrieb eines Räumwerkzeugs (10) ankoppelbar ist, welches in eine im Werkstück gebildete Vorbohrung eingesetzt ist, in dem ein Loch mit vorgegebenen Abmessungen eingebohrt werden soll, wobei der Vorschubschlitten in der Weise beweglich ist, daß er den Werkzeugträger und das Werkzeug in eine vorgegebene Richtung antreibt, um das Werkzeug durch die Vorbohrung zu ziehen, **dadurch gekennzeichnet**, daß der Vorschubschlitten Einrichtungen (16, 25) zur Abstützung des Werkzeugträgers (1) mit zwei Freiheitsgraden senkrecht zur vorgegebenen Richtung aufweist, um so für die Bearbeitung des Lochs eine automatische Zentrierung des Werkzeugs auf die Achse der Vorbohrung zu gestatten, wobei die Abstützeinrichtungen des Werkzeugträgers aus einer Platte (16) für den Aufbau des Werkzeugträgers (1) auf einer Platine (3) des Zugschlittens bestehen, um das Werkzeug (10) und den Werkzeugträger (1) mit einer Zugkraft zu beaufschlagen, wobei der letztere auf der Platte (16) entlang einer zu ihrer senkrechten Achse beweglich ist, wahrend die Platte (16) auf der Zugplatine (3) entlang einer zu diesen beiden Achsen senkrechten Achse beweglich angeordnet ist, so daß zwischen dem Werkzeugträger und der Platine eine mechanische Kupplung nach Art einer Kreuzscheibenkupplung vorliegt.

2. Schlitten nach Anspruch 1, dadurch **gekennzeichnet,** daß auf dem Werkzeugträger (1) ein Ring (17) angeordnet ist, um diesen entlang einer zur vorgegebenen Zugrichtung parallelen Achse gleitend abzustützen.

3. Schlitten nach Anspruch 2, dadurch **gekennzeichnet,** daß die Platte (16) auf dem Ring (17) angeordnet ist, wobei dieser Ring des weiteren mindestens einen Anschlag (25) trägt, der sich auf einem fest mit der Zugplatine (3) verbundenen und senkrecht zur Achse des Werkzeugträgers verlaufenden Laufring (27) abstützt, wobei zwischen dem Umfang des Anschlags (25) und der Platine ein Spiel (j₂) vorgesehen ist, um eine Verschiebung des Werkzeugträgers senkrecht zu seiner Achse während der Zentrierung des Werkzeugs in der Vorbohrung zu ermöglichen.

4. Schlitten nach Anspruch 3, dadurch **gekennzeichnet,** daß die Aufbauplatte die Form einer Scheibe mit darin eingelassenen Auskehlungen (20, 20'; 22, 22') an den Enden von zwei senkrechten Durchmessern aufweist, wobei zwei fest mit dem Ring (17) verbundene Zapfen (19, 19') mit den Auskehlungen auf einem Durchmesser so zusammenwirken, daß eine gleitende Montage des Werkzeugträgers (1) auf der Platte (16) entlang dieses Durchmessers gewährleistet ist, und wobei zwei weitere fest mit der Zugplatine (3) verbundene Zapfen (23, 23') mit den beiden anderen Auskehlungen (22, 22') so zusammenwirken, daß eine gleitende Montage der Platine (16) auf der Zugplatte (3) gewährleistet ist.

5. Schlitten nach einem der vorhergehenden Ansprüche, dadurch **gekennzeichnet,** daß der Werkzeugträger (1) die Zugplatine (3) durchsetzt und einen Meßwertgeber (7) aufweist, der auf dem Abschnitt des Werkzeugträgers (1) angebracht ist, der über die Platine (3) auf der Seite derselben übersteht, die jener gegenüber liegt, wo sich das Werkzeug (10) befindet, wobei der Meßwertgeber (7) von einer Einrichtung (4, 8) eingespannt ist, wenn diese die von der Platine (3) auf den Werkzeugträger (1) ausgeübte Zugkraft aufnimmt.

6. Schlitten nach Anspruch 5, dadurch **gekennzeichnet,** daß zwischen der Zugplatine (3) und einer Abstützeinrichtung (8) ein Spiel (j₁) gegeben ist, wenn keine Zugkraft aufgebracht wird.

7. Schlitten nach einem der Ansprüche 2 bis 6, dadurch **gekennzeichnet,** daß er Einrichtungen zum Rückstellen des Werkzeugs (1) in eine Sollzentrierposition auf der Zugplatine (3) aufweist.

8. Vorschubschlitten für eine Mehrspindelmaschine, dadurch **gekennzeichnet,** daß er aus der Kombination mehrerer Vorschubschlitten nach einem der vorhergehenden Ansprüche besteht, wobei Abstandhalter (34, 35) zwischen zwei benachbarten Schlitten eingesetzt sind, um den Sollmittenabstand der jeweiligen Werkzeugträger einzustellen.

9. Schlitten nach Anspruch 8, dadurch **gekennzeichnet,** daß die Abstandhalter die Form eines 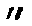 kammförmigen" Stützteils aufweisen, das so ausgebildet ist, daß die Werkzeugträger mit vorgegebenen Sollmittenabständen voneinander angeordnet sind.

10. Einsatz eines Vorschubschlittens nach einem der Ansprüche 1 bis 9 bei einer Räummaschine oder einer Mehrspindelmaschine.
